(19) **Europäisches Patentamt / European Patent Office / Office européen des brevets**

(11) **EP 2 915 850 A1**

(12) **EUROPEAN PATENT APPLICATION**
published in accordance with Art. 153(4) EPC

(43) Date of publication:
09.09.2015 Bulletin 2015/37

(21) Application number: 13850391.7

(22) Date of filing: 31.10.2013

(51) Int Cl.:
*C08L 71/02* (2006.01)  *C08G 18/00* (2006.01)
*C08G 18/48* (2006.01)  *C08G 65/332* (2006.01)
*C08K 5/01* (2006.01)  *C08G 101/00* (2006.01)

(86) International application number:
**PCT/JP2013/079501**

(87) International publication number:
**WO 2014/069556 (08.05.2014 Gazette 2014/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: 05.11.2012  JP 2012243506

(71) Applicant: **Mitsui Chemicals, Inc.**
**Tokyo 105-7117 (JP)**

(72) Inventors:
• **MIYATA, Atsushi**
**Sodegaura-shi**
**Chiba 299-0265 (JP)**

• **SATO, Kenichi**
**Sodegaura-shi**
**Chiba 299-0265 (JP)**
• **MATSUMOTO, Shinsuke**
**Sodegaura-shi**
**Chiba 299-0265 (JP)**

(74) Representative: **Hoffmann Eitle**
**Patent- und Rechtsanwälte PartmbB**
**Arabellastraße 30**
**81925 München (DE)**

(54) **RESIN PREMIX COMPOSITION, COMPOSITION FOR HARD POLYURETHANE FOAM, AND HARD POLYURETHANE FOAM**

(57)    An object of the invention is to provide resin premix compositions which include a polyol and a hydrocarbon foaming agent while still exhibiting good storage stability, the polyol being obtained without the use of ring-opening polymerization reaction of a cyclic ether. The resin premix composition of the invention includes at least a polyol and a hydrocarbon foaming agent, the polyol including a polyether ester polyol (A) obtained by reacting a polyether polyol with a fatty acid and/or a fatty acid ester, the polyether polyol being obtained by condensing a polyhydric alcohol including 50 mol% or more of a trihydric or higher alcohol.

EP 2 915 850 A1

**Description**

TECHNICAL FIELD

The present invention relates to resin premix compositions that include a polyol including a polyether ester polyol and a hydrocarbon foaming agent, the polyether ester polyol being obtained by condensing a polyether polyol resulting from the dehydration condensation of a trihydric or higher alcohol with a fatty acid and/or a fatty acid ester. The invention also relates to rigid polyurethane foaming compositions including the resin premix composition and a polyisocyanate, and to rigid polyurethane foams obtained by reacting the composition.

BACKGROUND ART

Polyether polyols that are raw materials for rigid polyurethane foams have been heretofore produced by the ring-opening polymerization of cyclic ether compounds such as ethylene oxide, propylene oxide and tetrahydrofuran in the presence of an active hydrogen compound as an initiator. This method is advantageous in that the reaction may proceed under relatively mild conditions by virtue of the fact that the cyclic ether compounds have high activity, and also in that the polyether polyols produced by the method have narrow molecular weight distribution. However, the cyclic ether compounds have low boiling point and high toxicity and are therefore difficult to store or handle during synthesis.

Further, due to the nature of the reaction, the average number of hydroxyl groups in such polyether polyols obtained from cyclic ether compounds does not exceed the number of active hydrogen atoms in the initiator. In some cases, the average number of hydroxyl groups may be lowered by the occurrence of side reactions during the reaction. Because polyether polyols for the production of rigid polyurethane foams require a very large number of hydroxyl groups, the initiator used in the preparation of such polyether polyols by the above production method needs to be selected from those initiators having a large number of hydroxyl groups such as pentaerythritol, sorbitol and sugars. However, initiators having a large number of hydroxyl groups are frequently solid and are difficult to handle as initiators.

On the other hand, polyether polyols may be also produced by the dehydration condensation of alcohols. Theoretically, this method can increase the number of hydroxyl groups per molecule of the polyether polyol by using, as the alcohol, a polyol compound having 3 or more hydroxyl groups per molecule. Examples of such polyether polyols obtained by the dehydration condensation of polyol compounds having 3 or more hydroxyl groups per molecule include polyglycerols obtained by the dehydration condensation of glycerol in the presence of an alkali (Patent Literature 1 and Patent Literature 2). While it is necessary that polyglycerols used as polyols in the production of rigid polyurethane foams have a high degree of condensation, highly condensed polyglycerols exhibit very high viscosity. Consequently, the use of such polyols alone in the production of rigid polyurethane foams encounters difficulties. Techniques have been then developed in which polyether polyols having low viscosity are obtained by condensing glycerol in combination with a monohydric or dihydric alcohol (Patent Literature 3 and Patent Literature 4).

Chlorofluorocarbons are traditional foaming agents used in rigid polyurethane foams for a long period of time. However, due to their high ozone depletion potentials and global warming potentials, the use of chlorofluorocarbons has been restricted or suppressed and has been increasingly replaced by other foaming agents, for example, hydrocarbon foaming agents such as pentane, isopentane and cyclopentane, and water. In the use of water as the foaming agent, foams are manufactured by the generation of carbon dioxide by the reaction between an isocyanate and water. However, such foams have a problem of embrittlement ascribed to the simultaneous formation of urea bonds. Thus, the production of rigid polyurethane foams requires the use of hydrocarbon foaming agents.

When, however, hydrocarbon foaming agents are used in the preparation of resin premix compositions containing the aforementioned condensed polyether polyols, the resin premix compositions are separated into phases, namely, poor storage stability is encountered because of the fact that the condensed polyether polyols have excessively high hydrophilicity.

The storage stability of the resin premix compositions may be ensured by increasing the compatibility between the foaming agents and the polyols. However, it has been reported that excessively high compatibility leads to a deterioration in thermal conductivity of the obtainable foams (Non Patent Literature 1).

CITATION LIST

PATENT LITERATURE

Patent Literature 1: JP-A-H02-172938
Patent Literature 2: JP-A-H07-216082

Patent Literature 3: WO 2008/053780
Patent Literature 4: WO 2009/131141

Non Patent Literature

Non Patent Literature 1: Proceedings of the Polyurethanes 1995 Conference, p. 292, S. Matsumoto et al.

SUMMARY OF INVENTION

TECHNICAL PROBLEM

The present invention has been made to solve the problems in the art described above. The invention provides resin premix compositions which include a polyol and a hydrocarbon foaming agent while still exhibiting good storage stability, the polyol being obtained without the use of ring-opening polymerization reaction of a cyclic ether.

SOLUTION TO PROBLEM

For example, the present invention resides in the following [1] to [11].

[1] A resin premix composition including at least a polyol and a hydrocarbon foaming agent,
the polyol including a polyether ester polyol (A) obtained by reacting a polyether polyol with a fatty acid and/or a fatty acid ester, the polyether polyol being obtained by condensing a polyhydric alcohol including 50 mol% or more of a trihydric or higher alcohol.
[2] The resin premix composition described in [1], wherein the polyol includes:

   (1) at least 10 parts by weight of the polyether ester polyol (A) and
   (2) 0 to 90 parts by weight of an additional polyol (wherein the total of (1) and (2) is 100 parts by weight).

[3] The resin premix composition described in [1], wherein the trihydric or higher alcohol is glycerol.
[4] The resin premix composition described in [1], wherein the polyhydric alcohol is glycerol.
[5] A rigid polyurethane foaming composition including the resin premix composition described in any one of [1] to [4], and a polyisocyanate.
[6] A rigid polyurethane foam obtained by reacting the resin premix composition described in any one of [1] to [4], and a polyisocyanate.
[7] The resin premix composition described in any one of [1] to [4], wherein the polyether ester polyol (A) has a hydroxyl value of 200 to 600 mg KOH/g.
[8] The resin premix composition described in any one of [1] to [4], wherein the polyether ester polyol (A) has a viscosity at 25°C of not more than 50,000 mPa · s.
[9] The resin premix composition described in any one of [1] to [4], wherein the polyether ester polyol (A) has an average number of functional groups of 3 or more.
[10] The resin premix composition described in any one of [1] to [4], wherein the fatty acid and/or the fatty acid ester includes 50 wt% or more of an unsaturated fatty acid and/or an unsaturated fatty acid ester.
[11] The resin premix composition described in any one of [1] to [4], wherein the fatty acid and/or the fatty acid ester includes 50 wt% or more of a saturated fatty acid having 10 to 14 carbon atoms and/or an ester compound of a saturated fatty acid having 10 to 14 carbon atoms.

ADVANTAGEOUS EFFECTS OF INVENTION

According to the present invention, polyether ester polyols having a large number of hydroxyl groups and still exhibiting low viscosity may be obtained easily. The polyether ester polyol may be mixed together with a hydrocarbon foaming agent so as to exhibit excellent compatibility, thus forming a resin premix composition having excellent storage stability. This resin premix composition is useful in the production of rigid polyurethane foams. Rigid polyurethane foams obtained using the resin premix composition may be used as heat insulators in products such as building panels, refrigerators, freezers and pipes, and as supports in structures such as houses and vehicles.

DESCRIPTION OF EMBODIMENTS

1. Resin premix compositions

A resin premix composition of the invention includes at least a polyol and a hydrocarbon foaming agent. The polyol includes a polyether ester polyol (A) obtained by reacting a polyether polyol with a fatty acid and/or a fatty acid ester, the polyether polyol being obtained by condensing a polyhydric alcohol including 50 mol% or more of a trihydric or higher alcohol (the total of the polyhydric alcohol(s) taken as 100 mol%).

Here, the term "resin premix composition" indicates a composition used in the production of rigid polyurethane foams which is free from a polyisocyanate described later.

(1) Polyols

[Polyether ester polyols (A)]

The polyether ester polyol (A) in the invention is a polyol for the production of rigid polyurethane foams that is obtained without the use of ring-opening polymerization reaction of a cyclic ether compound such as ethylene oxide, propylene oxide, butylene oxide or tetrahydrofuran. The resin premix composition including the polyether ester polyol (A) and a hydrocarbon foaming agent exhibits excellent storage stability probably because the polyether ester polyol (A) is obtained by condensing a polyether compound with a specific fatty acid and consequently attains high hydrophobicity.

The polyether ester polyol (A) may be usually obtained by etherifying a polyhydric alcohol including 50 mol% of a trihydric or higher alcohol by dehydration condensation to form a polyether polyol, and thereafter esterifying the polyether polyol with a fatty acid and/or a fatty acid ester by dehydration condensation.

(Polyether polyols)

(Polyhydric alcohols)

The polyhydric alcohols are not particularly limited. In view of the lower limit of the reaction temperature, those polyhydric alcohols having a boiling point of 160°C or more are preferable.

In the invention, the use of a trihydric or higher alcohol results in a polyol that has a sufficient number of functional groups for use in the production of rigid polyurethane foams. The proportion of the trihydric or higher alcohol is usually not less than 50 mol% relative to 100 mol% of the polyhydric alcohol(s). To design a polyol having a larger number of functional groups, the proportion is preferably 70 to 100 mol%, and more preferably 90 to 100 mol%. If the proportion of the trihydric or higher alcohol is less than 50 mol%, the obtainable polyol has an insufficient number of functional groups and the use of such a polyol causes the shrinkage of rigid polyurethane foams.

Examples of the trihydric or higher alcohols include glycerol, trimethylolethane, trimethylolpropane, 1,2,6-hexanetriol, pentaerythritol, diglycerol, ditrimethylolpropane, dipentaerythritol, methyl glucoside and glucose. Liquid trihydric alcohols are advantageous for their easy handling. Thus, glycerol and diglycerol are preferably used, and glycerol having lower viscosity is more preferably used.

In the invention, the polyhydric alcohols may include a dihydric alcohol in order to reduce the viscosity of the polyol.

The proportion of the dihydric alcohol may be 50 mol% to 0 mol%, preferably 30 to 0 mol%, and more preferably 10 to 0 mol% relative to 100 mol% of the polyhydric alcohols.

The dihydric alcohols are not particularly limited, and examples thereof include ethylene glycol, diethylene glycol, triethylene glycol, propylene glycol, 1,3-propanediol, dipropylene glycol, tripropylene glycol, 1,2-butanediol, 1,3-butanediol, 1,4-butanediol, 2,3-butanediol, 1,5-pentanediol, neopentyl glycol, 1,6-hexanediol, hexylene glycol, 1,7-heptanediol, 1,8-octanediol, 1,9-nonanediol, 1,10-decanediol, 1,4-cyclohexanediol, isosorbide, bisphenol A, catechol, 4-t-butylcatechol, hydroquinone, 2-t-butylhydroquinone, resorcinol, p-hydroxyphenethyl alcohol, 1,4-dihydroxynaphthalene, 1,4-dihydroxyanthraquinone, polyethylene glycol 200 and polyethylene glycol 400. Commercially available dihydric alcohols may be used, with examples including ACTOCOL KB-280, ACTOCOL KB-300, ACTOCOL ES-41, ACTOCOL ES-01, ACTOCOL D-280 and ACTOCOL D-400 manufactured by Mitsui Chemicals, Inc.

The polyhydric alcohols may be used singly, or two or more may be used in combination.

Glycerol is preferably used as the polyhydric alcohol because glycerol is liquid and is easily handled when it is fed and also because the use of glycerol is an easy way to obtain a polyol with a sufficient number of functional groups by condensation.

(Condensation etherification catalysts)

The dehydration condensation reaction of the polyhydric alcohol is performed using a condensation etherification catalyst. It is preferable to use known catalysts used in the condensation reaction of glycerol, such as alkali catalysts, acid catalysts and solid acid catalysts. The catalyst concentration is not particularly limited. For example, the catalyst concentration is preferably 0.01 to 10 mol% relative to the total of hydroxyl groups of all the alcohol components such as glycerol, although not particularly limited thereto.

Examples of the alkali catalysts include hydroxides, carbonate salts and oxides of alkali metals and alkaline earth metals such as sodium, lithium, potassium, calcium, cesium and magnesium, and phosphazene catalysts such as tris[tris(dimethylamino)phosphoranylidene] phosphoric triamide (PZO), tetrakis[tris(dimethylamino)phosphoranylideneamino] phosphonium hydroxide (PZN) and tris[tris(dimethylamino)phosphoranylideneamino] phosphine sulfide (PZS).

Examples of the acid catalysts include iodine, hydrogen iodide, sulfuric acid, phosphoric acid, fluorosulfuric acid, phosphotungstic acid, methanesulfonic acid, trifluoromethanesulfonic acid, octanesulfonic acid, 1,1,2,2-tetrafluoroethanesulfonic acid, benzenesulfonic acid and para-toluenesulfonic acid.

The solid acid catalysts are not particularly limited and any such general catalysts may be used. Examples include those catalysts obtained by impregnating silicate salts such as smectite silicate salts, acid clays, activated clays and vermiculite with inorganic acids or organic acids followed by drying. Examples of the inorganic acids include hydrochloric acid, sulfuric acid, nitric acid, phosphoric acid, polyphosphoric acid, phosphorous acid and perchloric acid. Examples of the organic acids include formic acid, acetic acid, oxalic acid, monochloroacetic acid, trifluoroacetic acid, trifluoromethanesulfonic acid, para-toluenesulfonic acid, boric acid, tungstic acid, molybdic acid, vanadic acid, chromic acid and heteropoly acid.

(Dehydration condensation etherification reaction)

The condensation reaction of the polyhydric alcohol may be carried out using any type of a reaction apparatus as long as the apparatus is equipped with a device capable of distilling away water that is generated during the reaction. An example of the reaction apparatuses is such that a distillation column is connected to an upper portion of the reactor and further a condenser is connected to the column.

The distillation column is used to reflux components that are still to be reacted such as the polyhydric alcohol as the raw material and low-molecular products back to the reaction apparatus while discharging unnecessary components such as water generated by the reaction to the condenser. The number of theoretical stages in the distillation column is not particularly limited but is usually 1 to 20. The packings in the distillation column are not particularly limited, but such packings as raschig rings, berl saddles, McMahon packings, Canon packings, Stedman packings, Sulzer packings and Dixon packings may be generally used. The temperature of the distillation column is not particularly limited and may be controlled to an appropriate temperature using a cooling medium or a heating medium.

The condenser is used to condense water and low-boiling fractions generated by side reactions. These products are usually condensed with use of a cooling medium. The temperature of the cooling media is not particularly limited, but is usually about -30°C to 60°C.

The reaction temperature in the dehydration condensation is not particularly limited as long as the dehydration condensation may be initiated at the temperature. The reaction temperature is usually 160 to 280°C, and preferably 200 to 270°C. The pressure during the reaction is not particularly limited, and the reaction may be carried out at normal pressure, reduced pressure or increased pressure as long as most of the polyhydric alcohol will not be distilled away together with water.

In the case where a plurality of polyhydric alcohols are used, all the alcohols may be mixed together and be subjected to the reaction in the presence of the catalyst. Alternatively, some of the alcohols may be condensed first and the other alcohols may be added or dropped during the course of the condensation reaction.

The hydroxyl value of the polyether polyol at the completion of the etherification is not particularly limited as long as the polyether ester polyol (A) that will be obtained by esterification will have a hydroxyl value of 200 to 600 mg KOH/g. Preferably, the hydroxyl value of the polyether polyol is 400 to 1400 mg KOH/g, and more preferably 600 to 1200 mg KOH/g.

With an excessively low hydroxyl value, the polyether polyol exhibits very high viscosity and consequently the viscosity of the polyol after esterification is increased. If the hydroxyl value is excessively high, the condensation does not proceed to a sufficient extent, making it difficult to obtain hardness required for rigid polyurethane foams.

(Purification of polyether polyols)

The polyether polyol obtained may be purified to remove the catalyst, or may be subjected to the condensation esterification in the next step directly without any particular purification. Any of various known purification techniques may be adopted in accordance with the type of the catalyst used.

When the catalyst is an alkali catalyst such as potassium hydroxide, sodium hydroxide, potassium carbonate or a phosphazene catalyst, the catalyst may be removed by neutralizing the alkali with an acid such as hydrochloric acid, acetic acid or oxalic acid followed by filtration, or by removing the cations with use of a cation exchange resin. In the case of an acid catalyst such as sulfuric acid, para-toluenesulfonic acid, hydrochloric acid or phosphoric acid, the catalyst may be removed by neutralizing the acid with a base such as sodium hydroxide, potassium hydroxide or potassium carbonate followed by filtration, or by removing the anions with use of an anion exchange resin. In the event that the polyol is colored, the coloring component may be removed by adsorption to an adsorbent such as activated carbon.

(Fatty acids and/or fatty acid esters)

The fatty acids and/or the fatty acid esters are not particularly limited. However, fatty acids having 10 to 24 carbon atoms and/or ester compounds of fatty acids having 10 to 24 carbon atoms are preferable. Examples of such fatty acids and/or fatty acid esters include capric acid, lauric acid, myristic acid, palmitic acid, stearic acid, oleic acid, linolic acid, linolenic acid, arachidic acid, arachidonic acid, behenic acid and lignoceric acid; ester compounds of these fatty acids; fatty acids obtained by hydrolyzing natural oils and fats such as soybean oil fatty acid, palm oil fatty acid, palm kernel oil fatty acid, coconut oil fatty acid, sunflower oil fatty acid, rapeseed oil fatty acid and cottonseed oil fatty acid; and ester compounds of these fatty acids. Examples of the ester compounds include methyl esters, ethyl esters and propyl esters.

In order to obtain a liquid polyol exhibiting high compatibility with a hydrocarbon foaming agent, the fatty acid and/or the fatty acid ester having the above number of carbon atoms is preferably used in a ratio of not less than 50 wt%, more preferably not less than 70 wt%, and still more preferably not less than 80 wt% relative to the total amount of the fatty acid(s) and/or the fatty acid ester(s) used in the invention. If a fatty acid having 9 or less carbon atoms is used in a ratio exceeding 50 wt% relative to the total amount of the fatty acid(s) and/or the fatty acid ester(s), hydrophobicity is so decreased that the polyol may be separated when it is mixed together with a hydrocarbon foaming agent. If a fatty acid having 25 or more carbon atoms and/or an ester of such a fatty acid is used in a ratio exceeding 50 wt%, the crystallinity of the polyol is so increased that the polyol becomes solid, thus making the preparation of a polyurethane foam difficult.

If the fatty acids and/or the fatty acid esters include a large proportion of a saturated fatty acid having 16 to 24 carbon atoms, there is a risk that the obtainable polyether ester polyol (A) may be solidified. It is therefore preferable that when the fatty acids and/or the fatty acid esters include a saturated fatty acid and/or a saturated fatty acid ester, the fatty acid components include 50 wt% or more of a saturated fatty acid having 10 to 14 carbon atoms and/or an ester compound of a saturated fatty acid having 10 to 14 carbon atoms.

It is also preferable that the fatty acids or the fatty acid esters include 50 wt% or more of an unsaturated fatty acid and/or an unsaturated fatty acid ester.

(Condensation esterification reaction)

The esterification reaction may be carried out using any type of a reaction apparatus as long as the apparatus is equipped with a device capable of distilling away alcohols or water that is generated during the reaction. For example, the condensation reaction may be performed at a high temperature in an inert gas such as nitrogen gas in the absence of solvents, or may be performed by a known polymerization method such as solution polymerization. The temperature in the high-temperature condensation in the absence of solvents is not particularly limited as long as the dehydration condensation or the dealcoholization condensation may occur at the temperature. Temperatures of 160°C to 260°C are usually preferable. The pressure during the reaction may be any of increased pressure, normal pressure or reduced pressure as long as the dehydration or dealcoholization condensation is feasible. From the viewpoint of reaction efficiency, the reaction is preferably carried out at normal pressure or reduced pressure.

The esterification may be catalyzed by catalysts, for example, tin catalysts such as tin octoate and dibutyltin dilaurate, titanium catalysts such as titanium tetra-normal-butoxide, titanium tetraisopropoxide and titanium lactate, and other catalysts such as known esterification catalysts such as bismuth catalysts.

(Polyether ester polyols (A))

The polyether ester polyol (A) in the invention has an acid value of 0 to 5 mg KOH/g, preferably 0 to 3 mg KOH/g, and more preferably 0 to 2 mg KOH/g. Any acid value exceeding 5 mg KOH/g is disadvantageous because the reactivity in the urethane-forming reaction is reduced.

The polyether ester polyol (A) in the invention preferably has a hydroxyl value of 200 to 600 mg KOH/g, and more preferably 300 to 550 mg KOH/g. Any hydroxyl value that is less than 200 mg KOH/g results in the softening of foams, and rigid foams are hardly obtained. If the hydroxyl value exceeds 600 mg KOH/g, the amount of the fatty acid that has been introduced is small. Namely, the fatty acid and the unreacted polyether polyol may remain and separate from the polyol.

The polyether ester polyol (A) in the invention preferably has a viscosity at 25°C of not more than 50,000 mPa·s, and more preferably not more than 20,000 mPa·s. With the viscosity exceeding 50, 000 mPa·s, the polyol is so viscous that difficulties are encountered in the preparation of polyurethane foams. When the viscosity is 20, 000 mPa·s or less, the polyol may be handled more easily.

Further, the polyether ester polyol (A) preferably has an average number of functional groups of 3 or more, and more preferably 3.5 or more. If the average number of functional groups is less than 3, the polyether ester polyol fails to ensure strength required for rigid polyurethane foams due to the excessively small number of functional groups. In order to obtain polyurethane foams exhibiting sufficient strength, the average number of functional groups is more preferably 3.5 or more.

[Additional polyols]

The polyol in the invention includes the polyether ester polyol (A). Namely, the polyol may be the polyether ester polyol (A) alone or a combination of two or more polyols including the polyether ester polyol and an additional polyol(s). When the polyols include an additional polyol, it is preferable that the amount of the polyether ester polyol (A) be at least 10 parts by weight (10 to 100 parts by weight), more preferably 20 to 100 parts by weight, and the amount of the additional polyol be 0 to 90 parts by weight, more preferably 0 to 80 parts by weight with respect to 100 parts by weight of the total of the polyols used in the invention.

The additional polyols are not particularly limited as long as such polyols are different from the polyether ester polyol (A) and have hydroxyl groups at molecular ends. Examples include known polyols such as polyether polyols, polyester polyols and polymer polyols (polymer-dispersed polyols).

Examples of the polyether polyols used as the additional polyols include those polyether polyols obtained by the addition polymerization of alkylene oxides to polyhydric alcohols, aromatic amines and aliphatic amines.

The polyhydric alcohols may be any of such alcohols used in the production of polyether polyols. Specific examples include ethylene glycol, diethylene glycol, triethylene glycol, propylene glycol, dipropylene glycol, tripropylene glycol, trimethylolpropane, trimethylolethane, glycerol, pentaerythritol, alpha-methyl glucoside, maltose, sorbitol and sucrose. These alcohols may be used singly, or a plurality of these alcohols may be used in combination.

Examples of the aromatic amines include tolylenediamine (hereinafter, abbreviated as "TDA") and/or crude TDA, and diphenylmethanediamine (hereinafter, abbreviated as "MDA") and/or crude MDA.

Examples of the aliphatic amines include ethylenediamine, triethanolamine and isopropanolamine. These amines may be used singly, or a plurality of these amines may be used in combination.

The alkylene oxides may be any of alkylene oxides used in the production of polyether polyols. For example, alkylene oxides having 2 to 8 carbon atoms may be used. Specific examples include ethylene oxide, propylene oxide and butylene oxide. In particular, propylene oxide and butylene oxide are preferably used. These oxides may be used singly, or a plurality of these oxides may be used in combination.

Commercially available polyether polyols may be used, with examples including GR-84T, DA-401P, GR-33F and T-700S (trademark: ACTOCOL; manufactured by Mitsui Chemicals, Inc.).

Examples of the polyester polyols used as the additional polyols include those obtained by the semi-esterification of anhydrides of acids such as aromatic carboxylic acids and aliphatic carboxylic acids with polyhydric alcohols or aliphatic amines followed by the polymerization of alkylene oxides, and those obtained by the condensation reaction of aromatic carboxylic acids or aliphatic carboxylic acids with polyhydric alcohols.

Examples of the aromatic carboxylic acids include phthalic acid, terephthalic acid, isophthalic acid and pyromellitic acid. Examples of the anhydrides of aromatic carboxylic acids include phthalic anhydride and pyromellitic anhydride.

Examples of the aliphatic carboxylic acids include adipic acid, succinic acid and maleic acid. Examples of the anhydrides of aliphatic carboxylic acids include succinic anhydride and maleic anhydride.

Commercially available polyester polyols may be used, with examples including RMK-342 (trademark: MAXIMOL; manufactured by Kawasaki Kasei Chemicals Ltd.).

Examples of the polymer polyols include those polymer polyols obtained from polyether polyols.

The polymer polyol may be obtained by the dispersion polymerization of an unsaturated compound in a polyether polyol using a radical initiator such as azobisisobutyronitrile, thus forming a dispersion of vinyl polymer particles in the polyether polyol. The vinyl polymer particles may be particles of the vinyl polymer of the unsaturated compound, and are preferably polymer particles formed by the grafting of at least part of the unsaturated compound to the polyether polyol that is the dispersion medium during the dispersion polymerization.

The unsaturated compound is a compound having an unsaturated bond in the molecule. Examples of such compounds include acrylonitrile, styrene and acrylamide. Such unsaturated compounds may be used singly, or two or more may be used in combination. The production of the polymer polyol may involve additives such as a dispersion stabilizer and a chain transfer agent in addition to the unsaturated compound.

The hydroxyl value of the additional polyols is not particularly limited as long as the preparation of rigid polyurethane foams is feasible. It is, however, preferable that the hydroxyl value be 200 mg KOH/g to 800 mg KOH/g.

(2) Urethane-forming catalysts

Catalysts that are added to the resin premix compositions of the invention may be any urethane-forming catalysts usually used in the foaming of urethanes, such as amines, aziridines, quaternary ammonium compounds, alkali metal salts, lead compounds, tin compounds, alcoholate compounds, phenolate compounds, metal halides and metal complex compounds.

Specific examples of the amines include trimethylaminoethylpiperazine, triethylamine, tripropylamine, N-methylmorpholine, N-ethylmorpholine, triethylenediamine, N,N,N',N'-tetramethylhexamethylenediamine, N,N,N',N',N'-pentamethyldiethylenetriamine (Polycat-5), dimethylcyclohexylamine (Polycat-8), diazobicycloundecene and 1,3,5-tris(dimethylaminopropyl)hexahydro-s-triazine (Polycat-41).

Examples of the aziridines include 2-ethylaziridine.

Examples of the quaternary ammonium compounds include carboxylate salts of tertiary amines.

Examples of the alkali metal salts include potassium octoate and sodium acetate.

Examples of the lead compounds include lead naphthenate and lead octoate.

Examples of the tin compounds include dibutyltin diacetate and dibutyltin dilaurate.

Examples of the alcoholate compounds include sodium methoxide and sodium ethoxide.

Examples of the phenolate compounds include potassium phenoxide, lithium phenoxide and sodium phenoxide.

Examples of the metal halides include iron chloride, zinc chloride, zinc bromide and tin chloride.

Examples of the metal complex compounds include such metal complex compounds as acetylacetone metal salts.

These catalysts may be used singly, or two or more may be used in combination. The amount of the catalysts is preferably 0.001 to 10 parts by weight, and more preferably 0.1 to 5 parts by weight with respect to 100 parts by weight of the total of the polyols used in the invention.

(3) Hydrocarbon foaming agents

The hydrocarbon foaming agents that are added to the resin premix compositions of the invention are preferably hydrocarbons having 3 to 8 carbon atoms. Specific examples include propane, n-butane, isobutane, n-pentane, isopentane, neopentane, n-hexane, isohexane, n-heptane, isoheptane, cyclopentane, cyclohexane and cycloheptane. These hydrocarbons may be used singly, or a plurality of hydrocarbons may be used in combination. Of these, cyclopentane and isopentane may be preferably used. In particular, cyclopentane is preferable.

In the invention, water may be used as an additional foaming agent. The water is usually ion exchange water or distilled water. In some cases, industrial water may be used as such.

In the invention, a chlorofluorocarbon compound may be used as an additional foaming agent. Examples of the chlorofluorocarbon compounds include HCFC-141b, HFC-245fa and HFC-365mfc.

The amount of the foaming agents is preferably 1 to 50 parts by weight, more preferably 2 to 40 parts by weight, and particularly preferably 5 to 30 parts by weight with respect to 100 parts by weight of the total of the polyols.

(4) Additives

[Foam stabilizers]

The resin premix composition of the invention may contain a foam stabilizer as required. The foam stabilizers may be conventional silicon-containing organic surfactants. Specific examples include silicone derivatives (alkylene oxide-modified polydimethylsiloxanes terminated with a functional group such as an alkoxy group or an active OH group). Examples of the foam stabilizers further include so-called nonionic surfactants such as polyoxyethylene octadecylamines and long-chain fatty acid alkylolamides. Specific examples of the foam stabilizers include SZ-1127, SZ-1142, SZ-1605, SZ-1642, SZ-1645, SZ-1649, SZ-1655, SZ-1675, SZ-1694, SZ-1711, L-580, L-5740, L-5420, L-5421, L-5440, SF-2935F, SF-2938F, SF-2940F, SF-2945F, SF-2908, SRX-294A, SH-190, SH-192 and SH-193 (trade names, manufactured by Toray Dow Corning Silicone Co., Ltd.); F-327, F-345, F-305, F-388 and F-394 (trade names, manufactured by Shin-Etsu Chemical Co., Ltd.); and TG-B-8404, TG-B-8461, TG-B-8462, TG-B-8466, TG-B-8467 and TG-B-8474 (trade names, silicone foam stabilizers manufactured by Evonik Japan Co., Ltd.). These foam stabilizers may be used singly, or two or more may be used in combination. The amount of the foam stabilizers is preferably 0.1 to 10 parts by weight, and more preferably 1 to 5 parts by weight with respect to 100 parts by weight of the total of the polyols.

[Chain extenders or crosslinking agents]

The resin premix composition of the invention may contain a chain extender or a crosslinking agent as required. When these components are used, the amount thereof is preferably 0.1 to 5 parts by weight, and more preferably 0.5 to 3 parts by weight with respect to 100 parts by weight of the polyols.

Examples of the chain extenders include dihydric alcohols such as ethylene glycol, propylene glycol, diethylene glycol, triethylene glycol, 1, 3-butanediol and 1,4-butanediol.

Examples of the crosslinking agents include polyhydric alcohols such as glycerol and diglycerol; alkanolamines such as triethanolamine, diethanolamine and monoethanolamine; aliphatic amine compounds such as ethylenediamine, diethylenetriamine and triethylenetetramine; aromatic amines such as aniline, 2,4-tolylenediamine and 2,6-tolylenediamine; aromatic alcohols such as bisphenol A, bisphenol F, hydroquinone, resorcin, novolac and resol; pentaerythritol and sorbitol.

[Other additives]

Various other additives may be added to the resin premix compositions of the invention in accordance with the applications or purposes. Examples of such additives include flame retardants, antioxidants, colorants and viscosity reducing agents.

The resin premix compositions of the invention exhibit excellent compatibility with hydrocarbon foaming agents and also have excellent storage stability.

2. Rigid polyurethane foaming compositions

A rigid polyurethane foaming composition of the invention includes the resin premix composition and a polyisocyanate.

[Polyisocyanates]

The polyisocyanates are not particularly limited and any bifunctional or higher functional polyisocyanates may be used. Examples include diphenylmethane diisocyanate (hereinafter, abbreviated as "MDI"), polymeric MDI, tolylene diisocyanate (hereinafter, abbreviated as "TDI"), hexamethylene diisocyanate (hereinafter, abbreviated as "HDI"), xylene diisocyanate (hereinafter, abbreviated as "XDI"), norbornene diisocyanate (hereinafter, abbreviated as "NBDI"), dicyclohexylmethane diisocyanate (hereinafter, abbreviated as "H12MDI"), hydrogenated xylylene diisocyanate (hereinafter, abbreviated as "H6XDI") and isophorone diisocyanate (hereinafter, abbreviated as "IPDI"). These polyisocyanates may be used singly, or two or more may be used in combination. In particular, the polyisocyanate for rigid polyurethane foams is preferably TDI and/or MDI.

The TDI may be a single isomer or a mixture of isomers. That is, 2,4-isomer (100% 2,4-TDI), 2,4-isomer/2,6-isomer = 80/20 or 65/35 (by mass), a mixture of these isomers, or a crude TDI containing polyfunctional tar (for example, TDI-TRC manufactured by Mitsui Chemicals, Inc.) may be used.

Preferred examples of the MDI include such compounds based on the 4,4'-isomer (4,4'-MDI), and polymeric MDI containing a trinuclear or higher nuclear component (for example, COSMONATE series manufactured by Mitsui Chemicals, Inc.).

It is also possible to use modified polyisocyanate compounds such as polyisocyanurates, carbodiimide-modified polyisocyanates, prepolymerized polyisocyanates (prepolymers obtained from polyisocyanates and the aforementioned polyols and having an isocyanate group at a molecular end) and urethodione-modified polyisocyanates. The polyisocyanates and the modified products thereof may be used singly, or two or more may be used in combination.

In the invention, the resin premix composition and the polyisocyanate may be used in any ratio without limitation. They are usually used in a molar ratio between the isocyanate groups in the polyisocyanate and the active hydrogen groups in the resin premix composition of 50:100 to 300:100, and preferably 90:100 to 150:100. The ratio of the number of moles of the isocyanate groups to the number of moles of the active hydrogen groups in the resin premix composition taken as 100 is written as the NCO index.

3. Rigid polyurethane foams

A rigid polyurethane foam of the invention may be produced by reacting and foaming the rigid polyurethane foaming composition (namely, the resin premix composition and the polyisocyanate) in the presence of the urethane-forming catalyst, the hydrocarbon foaming agent and optionally the foam stabilizer in accordance with a known method.

1 The composition may be foamed in any condition but is preferably foamed within a mold having a shape of the desired product or a shape similar to the shape of the desired product. The mixing of the polyisocyanate and the resin premix composition preferably takes place immediately before the foaming.

The components may be mixed together by a dynamic mixing method, a static mixing method, or both in combination.

Examples of the dynamic mixing methods include mixing with a stirring blade or the like. Examples of the static mixing methods include mixing in a machine head mixing chamber of a foaming apparatus, and mixing in a liquid feed pipe with a device such as a static mixer.

Preferably, static mixing is adopted to perform the mixing immediately before the foaming and the mixing of the liquid component with gas components such as a physical foaming agent, while the mixing of the components which may be stored as a mixture is carried out by dynamic mixing. The mixing temperature and the pressure may be determined appropriately as required in accordance with the desired quality of the rigid polyurethane foams, and the types and the chemical compositions of the raw materials. Heating may be performed prior to the mixing as required. For example, the rigid polyurethane foam may be obtained by mixing the starting components together by stirring at a liquid temperature of 10 to 50°C, and preferably 15 to 30°C, and feeding the mixture to an open mold or to a temperature-controllable closed mold under high pressure as required. In this case, the mold (metal mold) temperature is preferably 20 to 110°C, more preferably 30 to 60°C, and particularly preferably 45 to 55°C.

The term "rigid polyurethane foams" used in the invention indicates polyurethane foams having a hydroxyl value (OHV) of not less than 200 and a glass transition temperature (Tg) of not less than 100°C.

The rigid polyurethane foams obtained from the rigid polyurethane foaming compositions of the invention are excellent in compressive strength, dimensional stability, thermal conductivity, thermal insulating properties and forming properties. Thus, the rigid polyurethane foams of the invention may be used as heat insulators in products such as building panels, refrigerators, freezers and pipes, and as supports in structures such as houses and vehicles including automobiles.

EXAMPLES

The present invention will be described based on Examples hereinbelow. However, the scope of the invention is not limited to such Examples.

Unless otherwise mentioned, "part (s) " indicates "part (s) by weight". Analyses and measurements in Examples and Comparative Examples were performed by the following methods.

[Properties of polyether ester polyols]

Hydroxyl value: The hydroxyl value was defined as the weight in mg of potassium hydroxide corresponding to the hydroxyl groups present in 1 g of the polyether polyol. The measurement was carried out in accordance with JIS K1557, Section 6.4 "Hydroxyl value".

Acid value: The acid value was measured in accordance with JIS K6901, Section 5.3.2 "Partial acid value".

Viscosity: The viscosity was measured at 25°C using a cone plate rotational viscometer (an E-type viscometer).

Molecular weight: Approximately 0.05 g of the polyether polyol obtained was weighed. After the addition of 0.5 g of N,O-bis(trimethylsilyl)acetamide, the volume was adjusted to 10 mL by adding a dimethylformamide (hereinafter, abbreviated as "DMF") /tetrahydrofuran (hereinafter, abbreviated as "THF") mixture liquid (DMF:THF = 1:9 (by weight)). The liquid was analyzed on gel permeation chromatograph (GPC) HLC-8020 (manufactured by TOSOH CORPORATION) under the following conditions.

Eluent: THF
Eluent flow rate: 0.8 ml/min
Eluent temperature: 40°C
Column temperature: 40°C
Columns: TSKgel G-3000H, G-2000H and G-1000H manufactured by TOSOH CORPORATION were connected in series.
Detector: RI (differential refractive index) detector
Standard samples: Polystyrenes

Average number of functional groups: Based on the molecular weight determined by the GPC measurement and the hydroxyl value obtained by the measurement of hydroxyl value, the average number of hydroxyl groups was calculated using the following equation.

$$\text{Average number of functional groups = (Molecular weight}$$
$$\times \text{ Hydroxyl value)/(56108 + 74} \times \text{ Hydroxyl value)}$$

[Storage stability of resin premix compositions]

Resin premix compositions containing cyclopentane as a foaming agent were prepared by mixing raw materials together in accordance with the resin premix formulations described in Table 1. After the raw materials had been mixed, the resin premix compositions were allowed to stand in a room at 25°C for 1 week and were thereafter visually inspected for separation. In Table 1, "AA" indicates that the composition was free from separation and "BB" means that the composition had been separated.

[Reactivity test]

The resin premix composition was mixed together with a polyisocyanate. From the time when the mixing of the polyol and the polyisocyanate started (0 second), the cream time, the gel time and the tack-free time were measured.
Cream time (CT) (sec): The time lapsed until when the mixture liquid of the polyol and the polyisocyanate started to bubble.
Gel time (GT) (sec) : The time lapsed until when the liquid composition that was being foamed became stringy with the progress of gelation and formed a thread when a thin glass or metal rod was lightly inserted into an upper portion of the liquid composition and was quickly pulled out.
Tack-free time (TFT) (sec): The time lapsed until when the foaming completed and the foam became free from tackiness.

[Properties of rigid polyurethane foams]

Core density: The core density was measured by the method described in JIS K-6400. The core density refers to apparent density according to Japanese Industrial Standards (JIS). In the invention, a rectangular parallelepiped foam sample cut from a foam sample was used as the measurement sample.
Thermal conductivity: The thermal conductivity was measured in accordance with JIS A-1412-2 using TCA-8 manufactured by Anacon.
Compressive strength: In accordance with JIS K-7220, Rigid cellular plastics - Determination of compression properties, the foam produced was cut to 80 x 80 x 40 mm and was tested to determine the compressive strength in a direction parallel to the expansion direction.
Low-temperature dimensional change: An 80 mm x 80 mm x 20 mm test piece of the rigid polyurethane foam was allowed to stand in a thermostatic chamber at -30°C for 48 hours. The dimensional change of the test piece was measured.

[Example 1]

(Preparation of polyether polyol)

A flask equipped with a distillation column and a condenser was loaded with 600 g of diethylene glycol (27.0 mol% relative to the total of polyhydric alcohols) and 22.6 g of sodium hydroxide. In a nitrogen atmosphere, the materials were heated to a temperature of 250°C. After the temperature had been increased, 1406 g of glycerol (73.0 mol% relative to the total of polyhydric alcohols) was dropped over a period of 5 hours, and dehydration condensation was further performed at normal pressure for 18 hours. Thereafter, oxalic acid dihydrate was added in a molar amount half the number of moles of the sodium hydroxide, and neutralization was performed at 120°C for 1 hour. The resultant polyether polyol had a hydroxyl value of 806 mg KOH/g.

(Preparation of polyether ester polyol)

A flask equipped with a condenser was loaded with 750 g of the polyether polyols and 424.6 g of oleic acid of 72.1% purity (manufactured by Wako Pure Chemical Industries, Ltd.). As a catalyst, 0.1 g of titanium tetra-normal-butoxide was added. Esterification reaction was performed at a reaction temperature of 200°C for 15 hours, and the neutral salt that had been precipitated was removed using 5B filter paper at a pressure of 0.35 MPa. The resultant polyether ester polyol (1) was a brown cloudy liquid and had a hydroxyl value of 420 mg KOH/g, an acid value of 0.39 mg KOH/g and a viscosity at 25°C of 2670 mPa·s. The average number of functional groups in the polyol was 3.8.

(Fabrication of rigid polyurethane foam)

A resin premix composition was prepared with the formulation shown in Table 1 described later. The composition was stored in a tightly closed glass bottle at 25°C for 1 week. Thereafter, the resin premix composition was visually inspected for any separation. After confirming that the composition was free from separation, COSMONATE M-200 as an isocyanate was added to the resin premix composition adjusted to 20°C. The amount of the isocyanate was such that the NCO index would be 110. The mixture was stirred with a stirring blade for 5 seconds.

The mixture liquid that had been stirred was added to a 200 x 200 x 200 mm foaming box, and the cream time (CT), the gel time (GT) and the tack-free time (TFT) were measured. Separately, a prescribed amount of the mixture liquid obtained by the stirring was poured into a 400 x 300 x 50 mm vertical panel that had been heated at 40°C. The panel was closed with a lid, and the composition was cured for 5 minutes and was released from the mold. The thus-obtained sample was tested by the aforementioned methods to measure the core density, the thermal conductivity, the compressive strength and the low-temperature dimensional stability. The results of the measurements are described in Table 1.

[Example 2]

(Preparation of polyether polyol)

A flask equipped with a distillation column and a condenser was loaded with 500 g of diethylene glycol (22.4 mol% relative to the total of polyhydric alcohols) and 22.6 g of sodium hydroxide. In a nitrogen atmosphere, the materials were heated to a temperature of 250°C. After the temperature had been increased, 1500 g of glycerol (77.6 mol% relative to the total of polyhydric alcohols) was dropped over a period of 5 hours, and dehydration condensation was further performed at normal pressure for 18 hours. Thereafter, sulfuric acid was added in a molar amount half the number of moles of the sodium hydroxide, and neutralization was performed at 120°C for 1 hour. Thereafter, dehydration was carried out at 110°C and reduced pressure for 4 hours. The resultant polyether polyol had a hydroxyl value of 795 mg KOH/g.

(Preparation of polyether ester polyol)

A flask equipped with a condenser was loaded with 750 g of the polyether polyol and 423.3 g of oleic acid of 72.1% purity (manufactured by Wako Pure Chemical Industries, Ltd.). As a catalyst, 0.1 g of titanium tetra-normal-butoxide was added. Esterification reaction was performed at a reaction temperature of 200°C for 14.5 hours, and the neutral salt that had been precipitated was removed using 5B filter paper at a pressure of 0.35 MPa. The resultant polyether ester polyol (2) was a brown cloudy liquid and had a hydroxyl value of 430 mg KOH/g, an acid value of 0.48 mg KOH/g and a viscosity at 25°C of 5100 mPa·s. The average number of functional groups in the polyol was 4.1.

(Fabrication of rigid polyurethane foam)

A rigid polyurethane foam was prepared and the various properties were measured in the same manner as in Example 1, except that the formulation was changed as described in Table 1. The results are described in Table 1.

[Example 3]

(Preparation of polyether polyol)

A flask equipped with a distillation column and a condenser was loaded with 667 g of diethylene glycol (30.3 mol% relative to the total of polyhydric alcohols) and 22.6 g of sodium hydroxide. In a nitrogen atmosphere, the materials were heated to a temperature of 250°C. After the temperature had been increased, 1333 g of glycerol (69.7 mol% relative to the total of polyhydric alcohols) was dropped over a period of 5 hours, and dehydration condensation was further performed at normal pressure for 24 hours. Thereafter, oxalic acid dihydrate was added in a molar amount half the number of moles of the sodium hydroxide, and neutralization was performed at 120°C for 1 hour. Thereafter, dehydration was carried out at 110°C and reduced pressure for 4 hours. The neutral salt that had been precipitated was removed using 5B filter paper at a pressure of 0.35 MPa. The resultant polyether polyol had a hydroxyl value of 791 mg KOH/g.

(Preparation of polyether ester polyol)

A flask equipped with a condenser was loaded with 630 g of the polyether polyol and 373.5 g of oleic acid of 72.1% purity (manufactured by Wako Pure Chemical Industries, Ltd.). As a catalyst, 0.1 g of titanium tetra-normal-butoxide was added. Esterification reaction was performed at a reaction temperature of 200°C for 13 hours. The resultant polyether ester polyol (3) was a brown cloudy liquid and had a hydroxyl value of 424 mg KOH/g, an acid value of 0.49 mg KOH/g and a viscosity at 25°C of 1990 mPa·s. The average number of functional groups in the polyol was 3.7.

(Fabrication of rigid polyurethane foam)

A rigid polyurethane foam was prepared and the various properties were measured in the same manner as in Example 1, except that the formulation was changed as described in Table 1. The results are described in Table 1.

[Example 4]

(Preparation of polyether polyol)

A flask equipped with a distillation column and a condenser was loaded with 667 g of dipropylene glycol (25.6 mol% relative to the total of polyhydric alcohols) and 22.6 g of sodium hydroxide. In a nitrogen atmosphere, the materials were heated to a temperature of 250°C. After the temperature had been increased, 1333 g of glycerol (74.4 mol% relative to the total of polyhydric alcohols) was dropped over a period of 5 hours, and dehydration condensation was further performed at normal pressure for 18 hours. Thereafter, oxalic acid dihydrate was added in a molar amount half the number of moles of the sodium hydroxide, and neutralization was performed at 120°C for 1 hour. Thereafter, dehydration was carried out at 110°C and reduced pressure for 4 hours. The resultant polyether polyol had a hydroxyl value of 777 mg KOH/g.

(Preparation of polyether ester polyol)

A flask equipped with a condenser was loaded with 700 g of the polyether polyol and 379.7 g of oleic acid of 72.1% purity (manufactured by Wako Pure Chemical Industries, Ltd.). As a catalyst, 0.1 g of titanium tetra-normal-butoxide was added. Esterification reaction was performed at a reaction temperature of 200°C for 13.5 hours, and the neutral salt that had been precipitated was removed using 5B filter paper at a pressure of 0.35 MPa. The resultant polyether ester polyol (4) was a brown cloudy liquid and had a hydroxyl value of 432 mg KOH/g, an acid value of 0.39 mg KOH/g and a viscosity at 25°C of 2160 mPa · s. The average number of functional groups in the polyol was 3.9.

(Fabrication of rigid polyurethane foam)

A rigid polyurethane foam was prepared and the various properties were measured in the same manner as in Example 1, except that the formulation was changed as described in Table 1. The results are described in Table 1.

[Example 5]

(Preparation of polyether polyol)

A flask equipped with a distillation column and a condenser was loaded with 2024 g of glycerol and 7.05 g of sodium hydroxide. In a nitrogen atmosphere, the materials were heated to a temperature of 260°C and dehydration condensation was performed at normal pressure for 17 hours. Thereafter, oxalic acid dihydrate was added in a molar amount half the number of moles of the sodium hydroxide, and neutralization was performed at 120°C for 1 hour. Thereafter, dehydration was carried out at 110°C and reduced pressure for 4 hours. The neutral salt that had been precipitated was removed using 5B filter paper at a pressure of 0.35 MPa. The resultant polyether polyol had a hydroxyl value of 1044 mg KOH/g.

(Preparation of polyether ester polyol)

A flask equipped with a condenser was loaded with 540 g of the polyether polyol and 496.5 g of oleic acid of 72.1% purity (manufactured by Wako Pure Chemical Industries, Ltd.). As a catalyst, 0.1 g of titanium tetra-normal-butoxide was added. Esterification reaction was performed at a reaction temperature of 240°C for 4 hours, thereby obtaining a polyether ester polyol. The polyether ester polyol (5) obtained was a brown cloudy liquid and had a hydroxyl value of 449 mg KOH/g, an acid value of 0.56 mg KOH/g and a viscosity at 25°C of 19600 mPa·s. The average number of functional groups in the polyol was 4.2.

(Fabrication of rigid polyurethane foam)

A rigid polyurethane foam was prepared and the various properties were measured in the same manner as in Example 1, except that the formulation was changed as described in Table 1. The results are described in Table 1.

[Example 6]

(Preparation of polyether polyol)

A flask equipped with a distillation column and a condenser was loaded with 5060 g of glycerol and 17.63 g of sodium hydroxide. In a nitrogen atmosphere, the materials were heated to a temperature of 260°C and dehydration condensation was performed at normal pressure for 21 hours. Thereafter, oxalic acid dihydrate was added in a molar amount half the number of moles of the sodium hydroxide, and neutralization was performed at 120°C for 1 hour. Thereafter, dehydration was carried out at 120°C and normal pressure for 4 hours. The neutral salt that had been precipitated was removed using 5B filter paper at a pressure of 0. 35 MPa. The resultant polyether polyol had a hydroxyl value of 990 mg KOH/g.

(Preparation of polyether ester polyol)

A flask equipped with a condenser was loaded with 2100 g of the polyether polyol and 2163 g of oleic acid of 72.1% purity (manufactured by Wako Pure Chemical Industries, Ltd.). As a catalyst, 0.4 g of titanium tetra-normal-butoxide was added. Esterification reaction was performed at a reaction temperature of 240°C for 7 hours, thereby obtaining a polyether ester polyol. The polyether ester polyol (6) obtained was a brown cloudy liquid and had a hydroxyl value of 400 mg KOH/g, an acid value of 0.58 mg KOH/g and a viscosity at 25°C of 15300 mPa·s. The average number of functional groups in the polyol was 4.6.

(Fabrication of rigid polyurethane foam)

A rigid polyurethane foam was prepared and the various properties were measured in the same manner as in Example 1, except that the formulation was changed as described in Table 1. The results are described in Table 1.

[Example 7]

(Preparation of polyether polyol)

A flask equipped with a distillation column and a condenser was loaded with 5060 g of glycerol and 17.63 g of sodium hydroxide. In a nitrogen atmosphere, the materials were heated to a temperature of 260°C and dehydration condensation was performed at normal pressure for 27 hours. Thereafter, oxalic acid dihydrate was added in a molar amount half the number of moles of the sodium hydroxide, and neutralization was performed at 120°C for 1 hour. Thereafter, dehydration was carried out at 120°C and normal pressure for 4 hours. The neutral salt that had been precipitated was removed using 5B filter paper at a pressure of 0. 35 MPa. The resultant polyether polyol had a hydroxyl value of 951 mg KOH/g.

(Preparation of polyether ester polyol)

A flask equipped with a condenser was loaded with 561 g of the polyether polyol prepared in Example 6 and 500 g of a palm kernel oil fatty acid (containing 0.1% C10 saturated fatty acid, 52.3% C12 saturated fatty acid, 17.3% C14 saturated fatty acid, 9.1% C16 saturated fatty acid, 2.4% C18 saturated fatty acid and 18.8% unsaturated fatty acids). As a catalyst, 0.1 g of titanium tetra-normal-butoxide was added. Esterification reaction was performed at a reaction temperature of 240°C for 6.5 hours, thereby obtaining a polyether ester polyol. The polyether ester polyol (7) obtained was a brown transparent liquid and had a hydroxyl value of 396 mg KOH/g, an acid value of 0.6 mg KOH/g and a viscosity at 25°C of 14400 mPa·s. The average number of functional groups in the polyol was 4.5.

(Fabrication of rigid polyurethane foam)

A rigid polyurethane foam was prepared and the various properties were measured in the same manner as in Example 1, except that the formulation was changed as described in Table 1. The results are described in Table 1.

[Comparative Example 1]

(Preparation of polyether polyol)

A flask equipped with a distillation column and a condenser was loaded with 650 g of diethylene glycol and 45.2 g of sodium hydroxide. In a nitrogen atmosphere, the materials were heated to a temperature of 250°C. After the temperature had been increased, 1300 g of glycerol was dropped over a period of 5 hours, and dehydration condensation was further performed at normal pressure for 8 hours. Thereafter, oxalic acid dihydrate was added in a molar amount half the number of moles of the sodium hydroxide, and neutralization was performed at 120°C for 1 hour. Thereafter, dehydration was carried out at 110°C and 10 mmHg for 4 hours. The neutral salt that had been precipitated was removed using 5B filter paper at a pressure of 0.35 MPa, thereby obtaining a polyether polyol (8). The polyether polyol (8) had a hydroxyl value of 783 mg KOH/g and a viscosity at 25°C of 3050 mPa·s. The average number of functional groups in the polyol was 4.9.

(Fabrication of rigid polyurethane foam)

A resin premix composition was prepared with the formulation described in Table 1, and its storage stability was evaluated by allowing the composition to stand at 25°C for 1 week. Separation was observed and the production of foams was infeasible.

[Comparative Example 2]

(Fabrication of rigid polyurethane foam)

A rigid polyurethane foam was prepared and the various properties were measured in the same manner as in Example 1, except that the formulation was changed as described in Table 1. The results are described in Table 1. The foam obtained in Comparative Example 2 compared unfavorably to the foams obtained in Examples because of its higher thermal conductivity.
[Table 1]

[Table 1] Chemical makeups of resin premix compositions and properties of rigid polyurethane foams

| | Ex. 1 | Ex. 2 | Ex. 3 | Ex. 4 | Ex. 5 | Ex. 6 | Ex. 7 | Comp. Ex. 1 | Comp. Ex. 2 |
|---|---|---|---|---|---|---|---|---|---|
| Resin premix formulations | (Parts by weight) | (Parts by weight) | (Parts by weight) | (Parts by weight) | (Parts by weight) | (Parts by weight) | (Parts by weight) | (Parts by weight) | (Parts by weight) |
| Polyol | Polyol (1) | polyol (2) | polyol (3) | Polyol (4) | polyol (5) | Polyol (6) | Polyol (7) | Polyol(8) | |
| | 20 | 20 | 20 | 20 | 20 | 20 | 20 | 20 | |
| GR-84T | 25 | 25 | 25 | 25 | 25 | 25 | 25 | 45 | 45 |
| DA-401P | 35 | 35 | 35 | 35 | 35 | 35 | 35 | 35 | 35 |
| GR-33F | 10 | 10 | 10 | 10 | 10 | 10 | 10 | 10 | 10 |
| T-700S | 5 | 5 | 5 | 5 | 5 | 5 | 5 | 5 | 5 |
| RMK-342 | 5 | 5 | 5 | 5 | 5 | 5 | 5 | 5 | 5 |
| Water | 1.8 | 1.8 | 1.8 | 1.8 | 1.8 | 1.8 | 1.8 | 1.8 | 1.8 |
| SF-2938F | 1.3 | 1.3 | 1.3 | 1.3 | 1.3 | 1.3 | 1.3 | 1.3 | 1.3 |
| TG-B-8474 | 1 | 1 | 1 | 1 | 1 | 1 | 1 | 1 | 1 |
| Polycat-8 | 1.35 | 1.35 | 1.35 | 1.35 | 1.35 | 1.35 | 1.35 | 1.35 | 1.35 |
| Polycat-5 | 0.2 | 0.2 | 0.2 | 0.2 | 0.2 | 0.2 | 0.2 | 0.2 | 0.2 |
| Polycat-41 | 0.4 | 0.4 | 0.4 | 0.4 | 0.4 | 0.4 | 0.4 | 0.4 | 0.4 |
| Cyclopentane | 14.3 | 14.3 | 14.3 | 14.3 | 14.3 | 14.3 | 14.3 | 19.3 | 14.3 |
| Isocyanate (M-200) Index | 110 | 110 | 110 | 110 | 110 | 110 | 110 | - | 110 |
| Storage stability of resin premix composition | AA | AA | AA | AA | AA | AA | AA | BB | AA |
| Reactivity Cream time (s) | 9 | 9 | 9 | 10 | 9 | 10 | 9 | | 10 |
| Gel time (s) | 46 | 47 | 48 | 53 | 52 | 52 | 48 | | 60 |
| Tack-free time (s) | 70 | 70 | 73 | 81 | 78 | 71 | 70 | | 79 |
| Properties of foams Core density (kg/m3) | 34.1 | 33.4 | 34.1 | 34 | 34.4 | 33.1 | 33.4 | | 33.4 |
| Thermal conductivity (mW/m·K) | 20.1 | 20.21 | 20.2 | 20.29 | 20.21 | 20.39 | 20.31 | | 20.41 |
| Compressive strength (kPa) | 148 | 132 | 137 | 139 | 134 | 139 | 144 | | 148 |

16

(continued)

| Resin premix formulations | Ex. 1 | Ex. 2 | Ex. 3 | Ex. 4 | Ex. 5 | Ex. 6 | Ex. 7 | Comp. Ex. 1 | Comp. Ex. 2 |
|---|---|---|---|---|---|---|---|---|---|
| | (Parts by weight) | (Parts by weight) | (Parts by weight) | (Parts by weight) | (Parts by weight) | (Parts by | (Parts by weight) | (Parts by weight) | (Parts by weight) |
| Low-temperature dimensional change (%) | ≤1.0 | ≤1.0 | ≤ 1.0 | ≤ 1.0 | ≤1.0 | ≤1.0 | ≤1.0 | | ≤1.0 |

**Claims**

1. A resin premix composition comprising at least a polyol and a hydrocarbon foaming agent, the polyol including a polyether ester polyol (A) obtained by reacting a polyether polyol with a fatty acid and/or a fatty acid ester, the polyether polyol being obtained by condensing a polyhydric alcohol including 50 mol% or more of a trihydric or higher alcohol.

2. The resin premix composition according to claim 1, wherein the polyol includes:

   (1) at least 10 parts by weight of the polyether ester polyol (A) and
   (2) 0 to 90 parts by weight of an additional polyol (wherein the total of (1) and (2) is 100 parts by weight).

3. The resin premix composition according to claim 1, wherein the trihydric or higher alcohol is glycerol.

4. The resin premix composition according to claim 1, wherein the polyhydric alcohol is glycerol.

5. A rigid polyurethane foaming composition comprising the resin premix composition described in any one of claims 1 to 4, and a polyisocyanate.

6. A rigid polyurethane foam obtained by reacting the resin premix composition described in any one of claims 1 to 4, and a polyisocyanate.

7. The resin premix composition according to any one of claims 1 to 4, wherein the polyether ester polyol (A) has a hydroxyl value of 200 to 600 mg KOH/g.

8. The resin premix composition according to any one of claims 1 to 4, wherein the polyether ester polyol (A) has a viscosity at 25°C of not more than 50,000 mPa·s.

9. The resin premix composition according to any one of claims 1 to 4, wherein the polyether ester polyol (A) has an average number of functional groups of 3 or more.

10. The resin premix composition according to any one of claims 1 to 4, wherein the fatty acid and/or the fatty acid ester includes 50 wt% or more of an unsaturated fatty acid and/or an unsaturated fatty acid ester.

11. The resin premix composition according to any one of claims 1 to 4, wherein the fatty acid and/or the fatty acid ester includes 50 wt% or more of a saturated fatty acid having 10 to 14 carbon atoms and/or an ester compound of a saturated fatty acid having 10 to 14 carbon atoms.

## INTERNATIONAL SEARCH REPORT

| International application No. |
| --- |
| PCT/JP2013/079501 |

**A.   CLASSIFICATION OF SUBJECT MATTER**
*C08L71/02*(2006.01)i, *C08G18/00*(2006.01)i, *C08G18/48*(2006.01)i, *C08G65/332*
(2006.01)i, *C08K5/01*(2006.01)i, *C08G101/00*(2006.01)n

According to International Patent Classification (IPC) or to both national classification and IPC

**B.   FIELDS SEARCHED**

Minimum documentation searched (classification system followed by classification symbols)
C08L1/00-101/14, C08G18/00-18/71, C08G71/00-71/04, C08G65/00-67/04

Documentation searched other than minimum documentation to the extent that such documents are included in the fields searched
Jitsuyo Shinan Koho          1922–1996   Jitsuyo Shinan Toroku Koho   1996–2013
Kokai Jitsuyo Shinan Koho   1971–2013   Toroku Jitsuyo Shinan Koho   1994–2013

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| A | WO 2009/131141 A1  (Mitsui Chemicals, Inc.), 29 October 2009 (29.10.2009), claims; examples & TW 201000519 A | 1-11 |
| A | WO 2008/053780 A1  (Mitsui Chemicals Polyurethanes, Inc.), 08 May 2008 (08.05.2008), claims; examples & US 2010/0029799 A1     & EP 2080778 A1 & CN 101528810 A          & KR 10-2009-0083436 A & TW 200831559 A | 1-11 |

☒   Further documents are listed in the continuation of Box C.          ☐   See patent family annex.

| * | Special categories of cited documents: |
| --- | --- |
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 11 December, 2013 (11.12.13) | Date of mailing of the international search report 24 December, 2013 (24.12.13) |
| --- | --- |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/079501

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-095721 A  (Bayer MaterialScience AG.),<br>30 April 2010 (30.04.2010),<br>claims; examples<br>& US 2010/0099788 A1    & EP 2177555 A2<br>& DE 102008051882 A     & CA 2682423 A<br>& KR 10-2010-0042606 A  & SG 161171 A<br>& MX 2009010836 A       & CN 101899147 A<br>& BRA PI0905597         & RU 2009138049 A<br>& CA 2682423 A1 | 1-11 |
| A | JP 2006-291101 A  (Toyo Tire and Rubber Co.,<br>Ltd.),<br>26 October 2006 (26.10.2006),<br>claims; examples<br>(Family: none) | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H02172938 A
- JP H07216082 A
- WO 2008053780 A
- WO 2009131141 A

**Non-patent literature cited in the description**

- **S. MATSUMOTO.** *Proceedings of the Polyurethanes 1995 Conference,* 1995, 292